# EUROPEAN PATENT APPLICATION

(11) **EP 1 672 864 A1**
(43) Date of publication of application: **21.06.2006**
(21) Application number: 04030198.8
(22) Date of filing: 20.12.2004
(51) Int. Cl.: H04L 29/06, H04L 12/56

(54) **Method, multiplexer, GPRS/UMTS module, and system for allowing multiplexing of several IP data streams over one PPP session.**

(71) Applicant: SIEMENS AKTIENGESELLSCHAFT, 80333 München (DE)
(72) Inventor: Dippel, Rainer, Dr., 12203 Berlin (DE)

(57) **Abstract**

A multiplexer (134) comprises means (134) for receiving an IP data packet (201, 202, 203, 204), the IP data packet (201, 202, 203, 204) comprising a header further comprising a target port (303) or a destination address (305); and
means (134) for assigning, by using a predefined assigning rule (307), said IP data packet (201, 202, 203, 204) to one of at least two GPRS data channels (301, 131, 132) in response to on the target port or the destination address comprised in the header of the IP data packet (201, 202, 203, 204).

## Description

### Field of the invention

The invention relates generally to multiplexing, and more specifically to GPRS or UMTS modules, and to multiplexers and methods that can be employed therein.

### Background of the invention

Internet Protocol IP connections over the General Packet Radio Service GPRS are set up through so called Access Point Names APN. With an APN, a GPRS terminal can unambiguously open a unique data connection over GPRS. IP data is transmitted between the GPRS module, acting as modem, and the host system, such as a personal computer, using the Point-to-Point Protocol PPP.

On one hand, the GPRS allows for a terminal up to seven simultaneous data channels, so called PDP contexts, with separately adjustable properties for data transmission. On the other hand, the PPP can be run only in one instance over a serial line. In other words, for every GPRS data channel a separate PPP instance has been required, with an additional serial line between the host system and the GPRS module.

A GPRS module can so far use only one GPRS data connection at a time over one PPP connection. More GPRS data connections with different quality profiles and bandwidths cannot be used, or they at least need a larger number of parallel PPP instances, each with an associated serial line. Using more GPRS data connections for one PPP connection will nevertheless be a requirement for some services, such as Voice-over-IP VoIP.

### Summary of the invention

The problem of avoiding multiple serial lines and parallel PPP instances can be achieved with a method according to any one of claims 1 to 3, by using a multiplexer according to any one of claims 4 to 6, by using a GPRS or UMTS module according to claim 7 or 8, or with a system as in claim 9.

### Advantages of the invention

The method, multiplexer, and GPRS module allow multiplexing of several IP data streams over one PPP session. This is useful when transmitting and/or receiving such data streams on different GPRS data channels using predefined TCP/IP properties. An advantage of the invention is that duplication of the serial line connecting the host system to the GPRS module can be avoided. In a similar manner, the host system does not need to have a duplicated number of instances of PPP serial driver.

### List of Figures

In the following, the invention is described in more detail by way of examples shown in the appended drawings in Figures 1A to 3, of which:
Figure 1A shows a simplified architecture of a GPRS network;
Figure 1B shows functional blocks of a host system and of a GPRS module;
Figure 2 illustrates the operation of the multiplexer; and
Figure 3 illustrates a predefined assigning rule.

### Detailed description

IP packets carried over a serial interface are mapped responsive to their IP and TCP/UDP protocol fields to different GPRS connections, and vice versa.

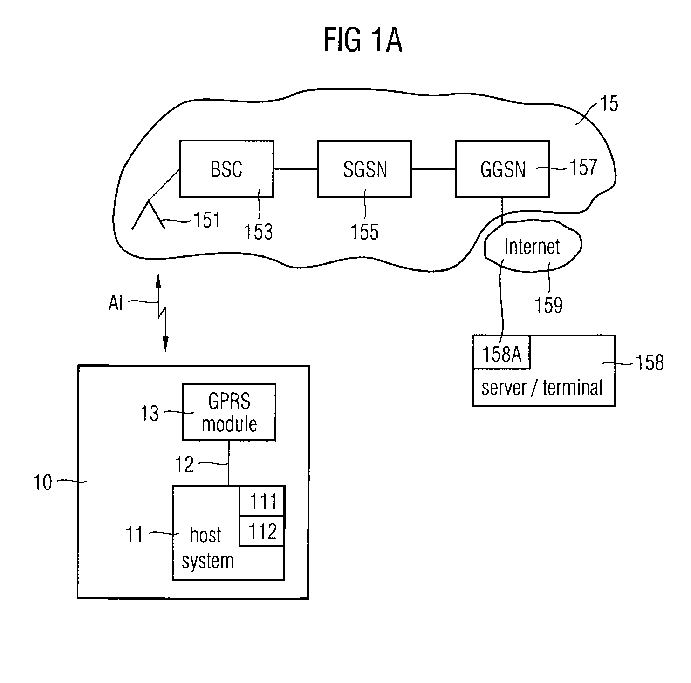

Figure 1A shows a system 10 connected to a GPRS network 15 through air interface AI. The system 10 comprises a host system 11 and a GPRS module 13 that acts as modem for the host system 11. The host system 11, such as a PC, is able to execute at least one application, such as a first application 111 or a second application 112.

A base station 151 of the GPRS network 15 listens to air interface AI and upon receiving a message from the GPRS module 13, forwards it to Base Station Controller 153 (in an UMTS system this would be a Radio Network Controller) which further forwards it to Serving GPRS Support Node SGSN 155. The SGSN 155 forwards the message via a Gateway GPRS Support Node GGSN 157 to the Internet 159, where different routers (omitted from Figure 1A for clarity) route the message to server or terminal 158 that has the destination IP address comprised in the message. The server or terminal 158 further passes the UDP/TCP part of the message to application 158A that can use information contained in the message.

In an analogous manner, a message from the application 158A to the host system 11 will be routed through the Internet 159 and to at least some part of the GPRS network 15. A base station 151 transmits the message over the air interface AI to the GPRS module 13.

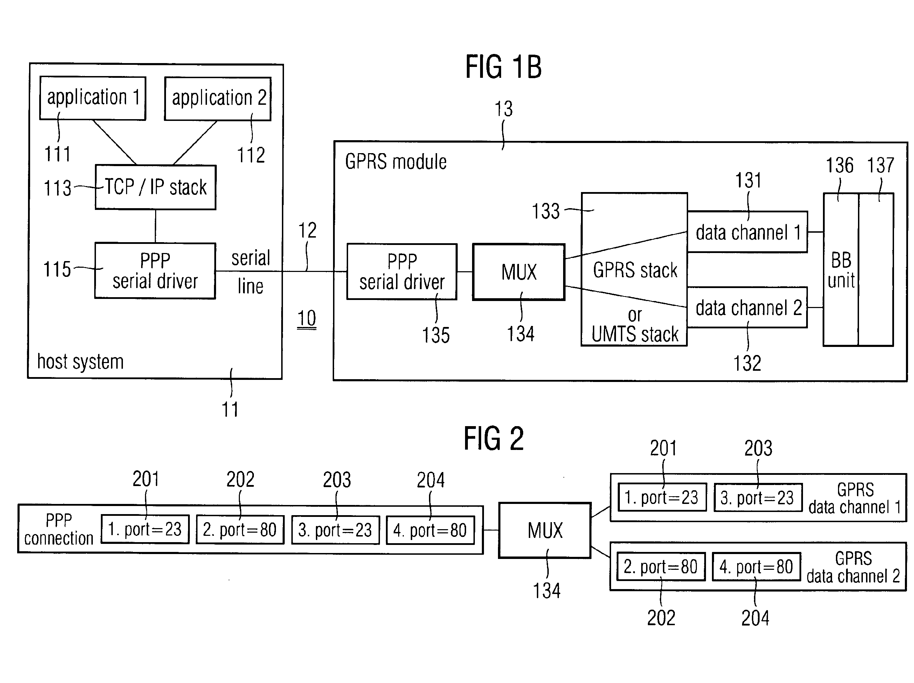

Figure 1B shows some functional blocks of a host system 10 and of a GPRS module 12. Antennas and some other components have been omitted from Figures 1A and 1B for clarity.

A first or a second application 111, 112 is adapted to communicate, especially by receiving and/or sending messages, with application 158A running on a server or a terminal 158A. At least a part of the communication, such as the messages, is passed through Transmission Control Protocol TCP and IP stack 113 of the host system 11. In addition or instead of this, any other protocol available over IP can be used. A particular example of such protocol is UDP.

The communication is transmitted over a serial line 12 between the host system 11 and the GPRS module 13. For the transmission, PPP is used, and PPP serial driver 115 in the host system 11 communicates with PPP serial driver 135 in the GPRS module.

Messages received from the PPP serial driver 115 by the PPP serial driver 135 are passed to multiplexer 134. From the multiplexer 134, the messages are passed to the GPRS stack 133, and then transmitted by the GPRS module 13 over the first data channel 131 or the second data channel 132, depending on the header information.

The multiplexer 134 takes care of mapping messages either to a first GPRS data channel 131 or to a second GPRS data channel 132. There are several ways in which this can be carried out.

One GPRS stack 133 can handle more than one GPRS data connections. Depending on which of the GPRS data channels 131, 132 is used for a message, the stack registers are updated accordingly. The multiplexer 134 can be used to store register values of the GPRS stack 133.

Data to be transmitted over the first or the second GPRS data channel 131, 132 is passed to a base band unit 136 which, according to the GPRS header information, passes the message to the transceiver 137 which transmits it to the air interface AI.

The transceiver 137 of the GPRS module 13 receives a message from air interface AI. The base band unit 136 decodes the received message and passes all GPRS messages to GPRS stack 133 regardless whether they came from a first GPRS data channel 131 or from a second GPRS data channel 132.

In this direction, the GPRS stack 133 removes the GPRS headers and passes the resulting TCP packets to the multiplexer 134. The multiplexer 134 passes the packets further to the PPP serial driver which communicates them over serial line to PPP serial driver 115. The PPP serial driver 115 removes the PPP headers and gives the TCP/IP messages to the TCP/IP stack 113 which extracts the payload for the applications 111, 112, depending on the packet.

The settings of the multiplexer 134 for mapping between the GPRS connections and the current IP data streams are preferably configured earlier. This can be done by the host system 11 over the serial line 12. For the multiplexer 134 or the GPRS module 13, no extra IP protocol stack is needed but it is enough to have the TCP/IP stack 113 in the host system 11.

In 3GPP Release 5/6 functions one mobile terminal will need to have the option to use more GPRS data connections. Especially, the IP Multimedia Subsystem IMS and Push-to-Talk need two independent GPRS connections for signaling and audio/video data transmission.

The multiplexer 134 is located in the GPRS module 13 along the path of the data stream between the PPP and the GPRS protocol stacks in the GPRS module 13. By using supplementary AT commands, the multiplexer 134 can be switched on and configured.

For the GPRS module 13, only one IP interface will be necessary.

Different protocols or applications having different quality requirements for mobile data transmission can be used simultaneously in the host system 11, without dedicated serial lines between the host system 11 and the GPRS module 13 for each protocol or application. One serial line 12 will, under normal circumstances, do.

If a second PDP context is used, the host system 11 will have only one IP address, but two GPRS connections (so called PDP contexts) which may have different quality settings.

The multiplexer 134 allows the GPRS module 13 to transmit an IP packet received from the host system 11 by the GPRS module 13 over a specific GPRS connection depending on the IP target addresses and/or port numbers of the packet. In the opposite direction, more than one IP packet streams received by the GPRS module 13 from a network 15 are sent to the PC over one serial line 12.

A host computer 11 may configure two GPRS contexts with AT command:
AT+CGDCONT <cid>[,<PDP_type>[,<APN>[,<PDP_addr>]

The host computer 11 could then configure the multiplexer 134 as follows:
AT+<cmd> cid1=port 25, cid2=port 80, auto

Figure 2 illustrates the operation of the multiplexer 134. In up-link direction, the multiplexer 134 receives IP data packets 201, 202, 203, 204 each comprising a header further comprising a target port or destination address. The multiplexer 134 assigns by using a predefined assigning rule each of said IP data packets 201, 203 to a first GPRS data channel 131 and data packets 202, 204 to a second GPRS data channel 132 in response to on the target port or destination address.

In down-link direction, the multiplexer 134 receives IP data packets 201, 203 from a first GPRS data channel 131 and IP data packets 202, 204 from a second GPRS data channel 132. Then the multiplexer 134 arranges IP data packets 201, 203 received from the first GPRS data channel 131 and IP data packets 202, 204 received from the second GPRS data channel 132 to a sequence 201, 202, 203, 204 of IP data packets. The exact order in which the IP data packets are ordered is not important since the data rate over the serial line 12 is much higher than over the air interface AI. Therefore, First-in First-out FIFO buffering or any other suitable buffering method can be used in the multiplexer 134.

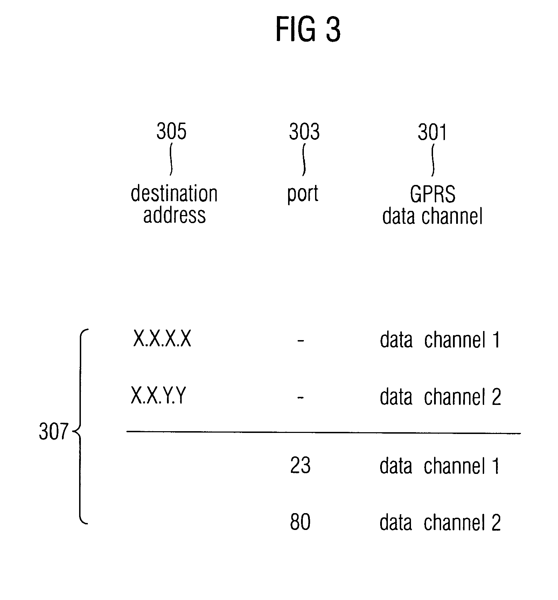

Figure 3 illustrates a predefined assigning rule 307 in the multiplexer 134. By using the predefined assigning rule 307 the multiplexer 134 assigns IP data packets comprising a specific destination address (305) or port (303) to a particular GPRS data channel 301. The GPRS data channels 301, corresponding to GPRS data connections 131, 132, can be static, i.e. available right from the beginning, or be set up dynamically when necessary.

Even though the examples in the drawings show only two GPRS data channels, the invention is by no means limited to just this particular number of GPRS data channels, but can be used with three, four, five or six or with an arbitrary number of GPRS data channels. Therefore the multiplexer 134 can be adapted to assign, by using a predefined assigning rule 307, each IP data packet 201, 202, 203, 204 to one of at least two GPRS data channels.

The GPRS stack 133 can be also a UMTS stack or a GPRS/UMTS stack.

## Claims

1. A method, **comprising the steps of:**
- receiving an IP data packet (201, 202, 203, 204), the IP data packet (201, 202, 203, 204) comprising a header further comprising a target port (303) or destination address (305);
- assigning, by using a predefined assigning rule (307), said IP data packet (201, 202, 203, 204) to one of at least two GPRS data channels (301, 131, 132) in response to the target port or the destination address (301, 305) comprised in the header of the IP data packet (201, 202, 203, 204).

2. A method, c**omprising the steps of:**
- receiving IP data packets (201, 202, 203, 204) from GPRS data channels (131, 132); and
- arranging IP data packets (201, 203) received from a first GPRS data channel (131) and IP data packets (202, 204) received from a second GPRS data channel (132) to a sequence (201, 202, 203, 204) of IP data packets.

3. A method **comprising**: the method steps of claims 1 and 2.

4. A multiplexer (134), **comprising:**
- means (134) for receiving an IP data packet (201, 202, 203, 204), the IP data packet (201, 202, 203, 204) comprising a header further comprising a target port (303) or a destination address (305); and
- means (134) for assigning, by using a predefined assigning rule (307), said IP data packet (201, 202, 203, 204) to one of at least two GPRS data channels (301, 131, 132) in response to on the target port or destination address comprised in the header of the IP data packet (201, 202, 203, 204).

5. A multiplexer (134), comprising:
- means (134) for receiving IP data packets (201, 202, 203, 204) from GPRS data channels (301, 131, 132); and
- arranging IP data packets (201, 203) received from a first GPRS data channel (131) and IP data packets (202, 204) received from a second GPRS data channel (132) to a sequence (201, 202, 203, 204) of IP data packets.

6. A multiplexer (134) according to claim 4 and 5.

7. A GPRS or UMTS module (13) comprising:
- a multiplexer (134) according to claim 4 or 6;
- a serial driver (135) adapted to receive an IP data packet (201, 202, 203, 204) over a serial line (12); and
- a GPRS or UMTS stack (133), connected to the multiplexer (134).

8. A GPRS or UMTS module (13) comprising:
- A GPRS or UMTS stack (133);
- a multiplexer (134) according to claim 5 or 6;
- a serial driver (135) adapted to transmit the sequence (201, 202, 203, 204) of IP data packets over a serial line (12).

9. A system (10) comprising:
- a GPRS or UMTS module (13) according to claim 7 or 8;
- a host system (11);
- a serial line (12) for connecting the host system (11) with the GPRS or UMTS module (13);
and wherein: the host system (11) comprises a serial driver (115) adapted to receive IP packets for an IP stack (113) over a serial line (12) and to transmit IP packets from the IP stack (113) over the serial line (12).
